# EUROPEAN PATENT APPLICATION

(11) **EP 4 428 391 A1**
(43) Date of publication of application: **11.09.2024**
(21) Application number: 21963295.7
(22) Date of filing: 05.11.2021
(51) Int. Cl.: F16H 1/32, F16C 33/41

(54) **WAVE GEAR DEVICE BEARING**

(71) Applicant: Harmonic Drive Systems Inc., Shinagawa-ku Tokyo 140-0013 (JP)
(72) Inventor: SHIBAMOTO, Yusuke, Azumino-shi, Nagano 399-8305 (JP); KOBAYASHI, Masaru, Azumino-shi, Nagano 399-8305 (JP)
(74) Representative: TBK
(86) International application number: PCT/JP2021/040849
(87) International publication number: WO 2023/079700

(57) **Abstract**

A bearing (1) for a strain wave gearing comprises a retainer (10) made of a single component. The retainer (10) includes first pockets (41) in which balls (4) can be loaded/unloaded from the axial direction, and a second pocket (42) that can hold the balls (4) from the axial direction. The first pockets (41) are positioned on both sides of the second pocket (42). A pocket opening (42a) of the second pocket (42) is defined by protruding surface portions (63) formed on a tip end portion of partition plate parts (32) on both sides of the pocket opening. When the balls (4) are pressed in from the axial direction, the protruding surface portions (63) are pushed, which spreads apart the partition plate parts (32), and the balls (4) are inserted. The engagement force between the inserted balls (4) and the protruding surface portions (63) of the partition plate parts (32) on both sides reliably block the retainer (10) from slipping out in the axial direction.

## Description

### TECHNICAL FIELD

The present invention relates to a bearing for a strain wave gearing comprising a retainer made of a single component. More specifically, the present invention relates to a bearing for a strain wave gearing configured such that some balls are enclosed in pockets of a retainer so as to not slip out in an axial direction, whereby the retainer is prevented from slipping out in the axial direction from between an outer ring and an inner ring.

### BACKGROUND ART

A ball riding retainer used in a bearing for a strain wave gearing is constituted of two components: an annular body in which ball pockets are formed, and a disk-shaped lid plate that can be coaxially attached to and detached from the annular body along the axial direction. These components are generally plastic molded articles. When the lid plate is fitted to the annular body, assembly defects such as cracking of an engaging claw or lifting of the lid plate may occur. In addition, compared to a normal retainer made of a single component, assembly work is required to integrate the two components, which proportionally increases the number of man-hours, requires special assembly equipment and the like, and increases the cost in comparison to a normal retainer.

Such problems do not occur with retainers other than ball riding retainers, but with unitary retainers, the retainer cannot be held so as to not come off in the axial direction from the strain wave gearing, and it is therefore essential to separately provide an implement or component to prevent the retainer from coming off. The product shape becomes that much more complex and a greater number of man-hours is thus required to process the components. In order to solve these problems, there is a need for a retainer that is formed from a single component having a retaining mechanism, and that is easy to assemble.

Patent Document 1 proposes a bearing for a strain wave gearing comprising a holder (retainer) made of a single component. This bearing for a strain wave gearing is configured such that some balls are held in pockets of the retainer so as to not slip out in an axial direction, whereby the retainer does not slip out in the axial direction from between an outer ring and an inner ring. In some of the pockets that hold balls, opening parts for inserting the balls are provided with a pair of elastically deformable claws (projecting parts). When the balls are inserted into the opening parts of the pockets along the axial direction, the balls are inserted into the pockets while the left and right claws are forcibly elastically deformed and pushed apart to the left and right. When the balls are inserted into the pockets, the pair of claws elastically return to original positions and hold the balls from the axial direction. When the holder attempts to move in the axial direction between the outer ring and the inner ring, the holder elastically returns and the pair of opposing claws engage the balls with a narrow opening width, and the holder is therefore prevented from moving in the axial direction and coming out from between the outer ring and the inner ring.

### PRIOR ART LITERATURE

### [Patent Documents]

[Patent Document 1] JPU 3122529

### DISCLOSURE OF THE INVENTION

### PROBLEMS TO BE SOLVED BY THE INVENTION

In a retainer provided with pairs of elastically deformable claws, a problem is encountered in that the claws, which are tapered to facilitate elastic deformation, are easily damaged and cracked when the balls are inserted, and are also prone to plastic deformation. Another problem encountered is that the engagement force between the pair of elastically deformable claws and the balls is not sufficient to reliably hold the retainer from slipping out in the axial direction, and the retainer tends to come off.

In view of the foregoing, it is an object of the present invention to provide a bearing for a strain wave gearing comprising a retainer made of a single component, in which there is formed a retaining part that is resistant to damage, cracking, and plastic deformation, and that can reliably prevent the retainer from coming off.

### MEANS FOR SOLVING PROBLEMS

To solve the problems described above, a bearing for a strain wave gearing of the present invention which comprises a retainer made of a single component with a plurality of balls that have been inserted between an outer ring and an inner ring and that are held in a state of being circumferentially spaced apart, the retainer having formed therein first pockets that allow the balls to be inserted and removed along an axial direction and second pockets that allow the balls to be held so as to not come out in the axial direction, and the retainer being prevented, by ball-holding force provided by the second pockets in the axial direction, from coming out in the axial direction from in between the outer ring and the inner ring,
the bearing for a strain wave gearing characterized in that:
the retainer includes an annular plate portion, and a plurality of partition plate portions that are arranged on the annular plate portion at predetermined intervals in the circumferential direction, and that protrude to one side in the axial direction from the annular plate portion;
the first pockets or the second pockets are formed between the pair of circumferentially adjacent partition plate portions;
the second pockets are gap portions defined by side surface portions facing each other in the pair of circumferentially adjacent partition plate portions, and are large enough to hold the balls; and
the partition plate portions are caused to gradually increase in thickness in the circumferential direction toward the tips of the partition plate portions in continuation with the tips of each of the side surface portions in the axial direction, thereby forming protruding surface portions that protrude in the direction of approaching each other and face each other across gaps narrower than the diameter of the balls, these protruding surface portions being continuous with tip surface portions of the partition plate portions that face one side in the axial direction.

In the retainer of the bearing for a strain wave gearing, the balls, when inserted into the second pockets, are pushed from the axial direction in between the protruding surface portions formed at the tips of the partition plate portions on both sides. The partition plate portions are pushed apart in the circumferential direction by the force acting on the protruding surface portions on both sides from the pushed-in balls, and the balls can be inserted into the second pockets. When the balls are inserted into the second pockets, the partition plate portions elastically return to the original positions thereof, and the gaps between the protruding surface portions become narrower than the diameter of the balls. The balls are held by the protruding surface portions so as to not come out of the second pockets in the axial direction.

Unlike cases in which protuberances such as claws formed at the tips of the partition plate portions are caused to elastically deform to insert the balls, damage, cracking, or plastic deformation is unlikely to occur in the protruding surface portions of the partition plate portions. The balls can therefore be reliably held so as to not come out of the second pockets in the axial direction. When the retainer attempts to come out in the axial direction, the retainer can be reliably prevented from coming out because the balls are held in the pockets by the partition plate portions on both sides.

The first pockets are preferably placed on both sides of each of the second pockets in the circumferential direction. The partition plate portions defining the second pockets are restrained, by the balls inserted in the first pockets, from elastically deforming away in a direction of being pushed apart in the circumferential direction. The retainer can be prevented from coming out by a large holding force provided by the partition plate portions supported by the balls from the circumferential direction.

### BRIEF DESCRIPTION OF THE DRAWINGS

Figure 1A is a side view of a bearing for a strain wave gearing to which the present invention is applied;
Figure 1B is a perspective view of a retainer of the bearing for a strain wave gearing;
Figure 1C is an explanatory drawing of the cross-sectional shapes of the first pockets and the second pockets when the retainer is unfolded on a plane and cut along a plane parallel to the axis;
Figure 1D is an explanatory drawing of a state when the balls are put in or taken out of the second pockets;
Figure 2A is an explanatory drawing of one example of a strain wave gearing comprising the bearing for a strain wave gearing of Fig. 1A;
Figure 2B is an explanatory drawing of a top-hat-type strain wave gearing;
Figure 2C is an explanatory drawing of a flat-type strain wave gearing;
Figure 3A is an explanatory drawing of a state when balls are inserted into the pockets of a retainer having elastic claws; and
Figure 3B is an explanatory drawing of a state when balls come out of the pockets of a retainer having elastic claws.

### MODE FOR CARRYING OUT THE INVENTION

An embodiment of a bearing for a strain wave gearing to which the present invention is applied shall be described below with reference to the drawings. The following embodiment presents one example of the present invention, and the present invention is not meant to be limited to this embodiment.

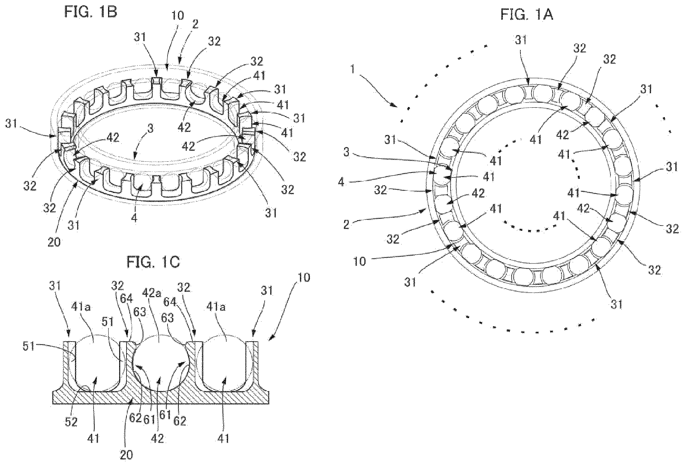

Fig. 1A is a side view of a bearing for a strain wave gearing. A bearing 1 for a strain wave gearing has an outer ring 2 capable of flexing in a radial direction, an inner ring 3 capable of flexing in the radial direction, a plurality of balls 4 inserted in a rollable state into a raceway groove formed between the outer ring 2 and the inner ring 3, and a retainer 10 made of a single component and disposed in the raceway groove in order to hold the balls in the raceway groove at predetermined intervals in a circumferential direction. The retainer 10 is, for example, an integrally molded article made of plastic.

Fig. 1B is a perspective view of the retainer 10. Referring to Fig. 1B as well, the retainer 10 includes an annular plate portion 20, and a plurality of partition plate portions 31, 32 that protrude to one side in the axial direction from an annular end surface of the annular plate portion 20. The partition plate portions 31, 32 are formed at regular intervals in the circumferential direction. Between each pair of partition plate portions 31, 31 adjacent in the circumferential direction is formed a first pocket 41 that opens to one side in the axial direction. Similarly, between each pair of partition plate portions 32, 32 adjacent in the circumferential direction there is formed a second pocket 42 that opens to one side in the axial direction. A ball 4 is inserted in a rollable state into each of the first and second pockets 41, 42.

In the present example, the second pockets 42 are placed in three locations spaced apart in the circumferential direction. In addition, the first and second pockets 41, 42 are arranged such that first pockets 41 are located on both sides of each second pocket 42 in the circumferential direction. The second pockets 42 may be placed at two locations, or at four or more locations.

Fig. 1C is an explanatory drawing of the cross-sectional shapes of the first pockets 41 and the second pockets 42 when the annular retainer 10 is unfolded on a plane and cut along a plane parallel to the axial direction. The first pockets 41 include pocket opening parts 41a large enough to allow the balls 4 to be inserted and taken out along the axial direction. By contrast, the second pockets 42 include pocket opening parts 42a that expand to a size allowing the balls 4 to be inserted and taken out along the axial direction when the partition plate portions 32 on both sides are pushed apart in the circumferential direction.

The partition plate portions 31 partition circumferentially adjacent first pockets 41 from each other. The partition plate portions 31 have first side surfaces 51 in which one side surface and the other side surface in the circumferential direction are symmetrical. Each first pocket 41 is a gap portion enclosed by a pair of first side surface portions 51 facing each other in the circumferential direction, and a bottom surface portion 52 smoothly connected to the first side surface portions 51. Between tip end edges of the first side surfaces 51 is a pocket opening part 41a. The first side surface portions 51 are recessed arcuate surfaces extending in the axial direction, having an inside diameter slightly larger than the diameter of the balls 4. The bottom surface portions 52 are flat surfaces extending in the radial direction and the circumferential direction. The balls 4 can be inserted and taken out along the axial direction through the pocket opening parts 41a of the first pockets 41.

By contrast, the partition plate portions 32 partition first pockets 41 and second pockets 42 from each other. One side surface of each partition plate portion 32 in the circumferential direction is a first side surface 51, and the other side surface is a second side surface 61. Each second pocket 42 is a gap portion enclosed by side surface portions 62 excluding the axial tip end portions of second side surfaces 61 facing each other along the circumferential direction. The side surface portions 62 are arc-shaped concave surfaces extending at an angle of more than 90°, and are interconnected on the side having the annular plate portion 20 and open in the axial direction on the opposite side. The arc-shaped concave surfaces have an inside diameter slightly larger than the balls 4 and extend in the radial direction.

The tip end portion of each partition plate portion 32 gradually increases in plate thickness toward the tip in a direction approaching the opposing partition plate portion 32, and formed at the tip end portion is a protruding surface portion 63 extending in the axial direction as a continuation of the side surface portion 62. The axial tip of the protruding surface portion 63 is connected to a tip surface portion 64 of the partition plate portion 32. Between opposing protruding surface portions 63 is a pocket opening part 42a. Each protruding surface portion 63 extends in a straight line in the radial direction, and the gap between opposing protruding surface portions 63 is narrower than the diameter of the balls 4 in the radial center.

The balls 4 can be inserted into the second pockets 42 by circumferentially pushing apart both protruding surface portions 63 defining the pocket opening parts 42a. The protruding surface portions 63 can engage with the inserted balls 4 from the axial direction. The balls 4 and the protruding surface portions 63 on both circumferential sides engage, and the retainer 10 is prevented from slipping out in the axial direction from the raceway groove between the outer ring 2 and the inner ring 3.

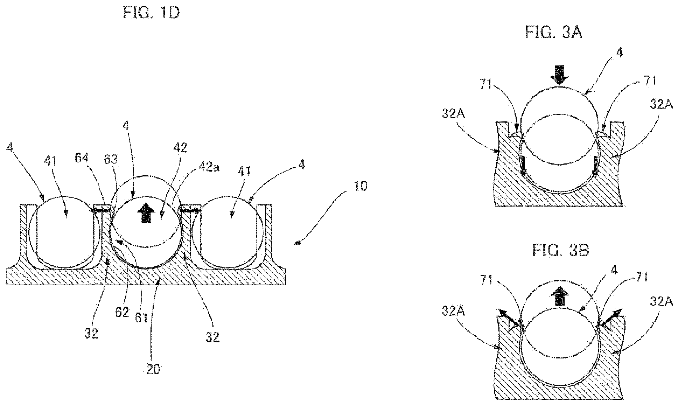

Fig. 1D is an explanatory drawing of a state when a ball 4 is put in and taken out of a second pocket 42. When inserted into a second pocket 42, the ball 4 is pushed into the pocket opening part 42a of the second pocket 42 from the axial direction. The protruding surface portions 63 on both sides defining the pocket opening part 42a are pushed apart in the circumferential direction by the ball 4. Force acts in the circumferential direction on the protruding surface portions 63 on both sides, as shown by the arrow in the drawing. As a result, the second partition plate portions 32 on both sides are slightly tilted away from each other. When the ball 4 is inserted into the pocket through the protruding surface portions 63, the second partition plate portions 32 on both sides return to the original state thereof due to elastic return force, the gap between the protruding surface portions 63 on both sides becomes narrower than the diameter of the ball 4, and the ball 4 is held so as to not fall out in the axial direction. The retainer 10 is prevented from coming out in the axial direction by engaging with the balls 4 inserted into the second pockets 42 placed in three locations.

Fig. 3A and 3B are explanatory drawings of a case in which a pocket opening part of a second pocket is defined by elastically deformable claw portions formed at the tip edges of partition plate portions 32A. In this case, when a ball is inserted, as shown in Fig. 3A, force acts on claws 71 on both sides in a direction in which the claws are caused to flex in the axial direction. In addition, when the inserted ball 4 slips out of the pocket opening part from the axial direction, as shown in Fig. 3B, the claws 71 on both sides are caused to flex away from each other before the partition plate portions 32A on both sides are pushed apart. Essentially, because the ball 4 is held only by engaging force of the claws 71, the force holding the ball 4 is insufficient and the ball 4 comes out readily.

In the retainer 10 of the present example, when a ball 4 is put in or taken out, force acts in the circumferential direction on the protruding surface portions 63 on both sides, and the partition plate portions 32 on both sides are pushed apart as a whole. Because force acts on the protruding surface portions 63 from a substantially perpendicular direction, damage, cracking, and plastic deformation of the protruding surface portions 63 are less likely to occur than when force is applied to the protruding surface portions 63 from an oblique direction. In addition, when the inserted ball 4 attempts to come out in the axial direction, the partition plate portions 32 on both sides must be pushed apart as a whole. The ball 4 can therefore be reliably held. That is, the retainer 10 can be reliably prevented from coming out in the axial direction by the engagement between the retainer 10 and the balls 4 inserted into the second pockets 42.

In addition, first pockets 41 are located adjacent to each second pocket 42, and the balls 4 inserted into the first pockets 41 support the partition plate portions 32 from the circumferential direction and restrain the tilting of the partition plate portions 32. Therefore, the partition plate portions 32 on both sides of the second pocket 42 are restrained from deforming apart from each other by the balls 4 on both sides, and the balls 4 are reliably held in the pockets. This feature also contributes to reliably preventing the retainer 10 from coming out in the axial direction.

As described above, in the bearing 1 for a strain wave gearing, the partition plate portions 32 on both sides of the second pockets 42 are pushed apart in the circumferential direction and the balls 4 are inserted into the second pockets 42. An effect is obtained in which the partition plate portions 32 are less likely to be partially damaged, cracked, or plastically deformed. When the balls 4 have been inserted into the first and second pockets 41, 42, the partition plate portions 32 on both sides of the second pockets 42 are restrained from tilting in the circumferential direction by the balls 4 inserted into the first pockets 41, and the holding force for preventing the balls 4 in the second pockets 42 from coming out in the axial direction can be increased. Therefore, an effect is obtained in which the retainer 10 is less likely to come out from in between the outer ring 2 and the inner ring 3.

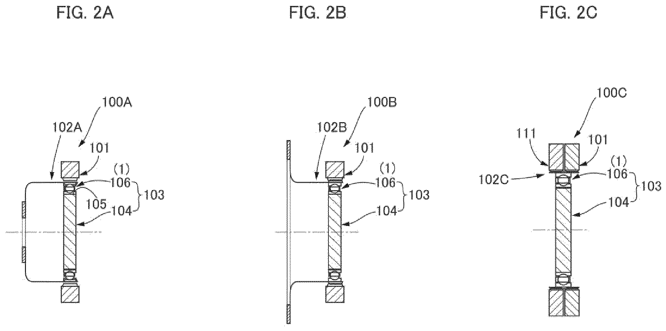

Next, Fig. 2A is an explanatory drawing of an example of a strain wave gearing having incorporated therein the bearing 1 for a strain wave gearing having the retainer 10 configured as described above. A strain wave gearing 100A comprises a rigid internally toothed gear 101, a cup-shaped flexible externally toothed gear 102A, and a wave generator 103. The wave generator 103 includes an ellipsoidally contoured rigid plug 104, and a wave bearing 106 attached between the externally toothed gear 102A and an ellipsoidal outer peripheral surface 105 of the rigid plug 104. The wave bearing 106 is the bearing 1 for a strain wave gearing configured as described above. The externally toothed gear 102A is caused to flex into an ellipsoidal shape by the wave generator 103, and meshes with the internally toothed gear 101 at the positions of the major axis of the ellipsoidal shape. When the wave generator 103 rotates, the meshing positions of the gears 101, 102A move in the circumferential direction and relative rotation occurs between the gears 101, 102A, the rotation corresponding to a difference in the number of teeth between the gears. One gear is fixed, and rotation is acquired from the other gear.

A known example of a strain wave gearing is a top-hat-type strain wave gearing 100B comprising a top-hat-shaped externally toothed gear 102B, as shown in Fig. 2B. In Fig. 2B, parts corresponding to those in Fig. 2A are denoted by the same reference symbols. Another known example is a flat-type strain wave gearing 100C comprising, in addition to an internally toothed gear 101, a cylindrical externally toothed gear 102C, and a wave generator 103, a drive-side internally toothed gear 111 that rotates integrally with the externally toothed gear 102C, as shown in Fig. 2C. The bearing 1 for a strain wave gearing of the present invention can also be used as the wave bearing 106 for these strain wave gearings 100B, 100C.

## Claims

1. A bearing for a strain wave gearing comprising a retainer made of a single component with a plurality of balls that have been inserted between an outer ring and an inner ring and that are held in a state of being circumferentially spaced apart,
the retainer having formed therein first pockets that allow the balls to be inserted and removed along an axial direction and second pockets that allow the balls to be held so as to not come out in the axial direction, and
the retainer is prevented from coming out in the axial direction from a gap between the outer ring and the inner ring by ball-holding force provided by the second pockets in the axial direction,
the bearing for a strain wave gearing **characterized in that**:
the retainer includes
an annular plate portion, and
a plurality of partition plate portions that are arranged on the annular plate portion at predetermined intervals in the circumferential direction, and that protrude to one side in the axial direction from the annular plate portion;
the first pockets or the second pockets are formed between a pair of circumferentially adjacent partition plate portions;
the second pockets are gap portions defined by side surface portions facing each other in the pair of circumferentially adjacent partition plate portions, and are large enough to hold the balls;
the partition plate portions are caused to gradually increase in thickness in the circumferential direction toward tips of the partition plate portions in continuation with tips of each of the side surface portions in the axial direction, thereby forming protruding surface portions that protrude in the direction of approaching each other and face each other across gaps narrower than a diameter of the balls; and
the protruding surface portions are continuous with tip surface portions of the partition plate portions that face one side in the axial direction.

2. The bearing for a strain wave gearing of claim 1,
wherein
the first pockets are placed on both sides of each of the second pockets in the circumferential direction, and
the partition plate portions defining the second pockets are restrained, by the balls inserted into the first pockets, from elastically deforming away from each other in the circumferential direction.
